# EUROPEAN PATENT APPLICATION

(11) **EP 1 744 414 A2**
(43) Date of publication of application: **17.01.2007**
(21) Application number: 06253621.4
(22) Date of filing: 11.07.2006
(51) Int. Cl.: H01S 3/105, H01S 3/13

(54) **Frequency-stabilized laser and frequency stabilizing method**

(30) Priority: 11.07.2005 JP 2005201142
(71) Applicant: MITUTOYO CORPORATION, Kawasaki-shi, Kanagawa 213-8533 (JP)
(72) Inventor: Oozeki, Hidekazu, Tsukuba-shi Ibaraki 305-0854 (JP); Ishii, Yasushi, Tsukuba-shi Ibaraki 305-0854 (JP)
(74) Representative: Skone James, Robert Edmund

(57) **Abstract**

The invention provides a frequency-stabilized laser and frequency-stabilizing method capable of stabilizing an oscillation frequency of laser beam. A photodetector detects an optical output signal obtained when a reference laser beam transmits through an absorption cell. A third-order differential signal detector generates a third-order differential signal of the optical output signal. A first actuator (125) varies the resonator length. A first driver (31) drives the first actuator (125). A second actuator (126) varies resonator length. A second driver (36) drives the second actuator (126). A first controller (30) controls the first driver (31) based on the optical output signal. A second controller (35) controls the resonator length based on the third-order differential signal using the second actuator. The first actuator and the second actuator are used to control the resonator length to stabilize the oscillation frequency.

## Description

### CROSS REFERENCE TO RELATED APPLICATION

This application is based on and claims the benefit of priority from the prior Japanese Patent Application No. 2005-201142, filed on July 11, 2005, the entire contents of which are incorporated herein by reference.

### BACKGROUND OF THE INVENTION

### Field of the Invention

The present invention relates to a frequency-stabilized laser and frequency-stabilizing method capable of stabilizing an oscillation frequency of laser beam by varying a resonator length based on an optical output signal.

### Description of the Related Art

When a semiconductor laser-excited Nd:YAG crystal or the like is used as a gain medium in a 532nm range solid state laser for continuous wave oscillation, the wavelength of the solid state laser can be used as a measure of length. When a length is actually measured using a wavelength of laser beam, the laser beam is required to oscillate at a single frequency, that is, in a single longitudinal mode. When an atomic or molecular absorption spectrometry is used to stabilize the frequency of laser beam, the oscillation frequency should be selected arbitrarily.

As a method of selecting and unifying the oscillation mode of the laser beam, a method that uses an etalon in a resonator and a method that uses a grating in a resonator are widely known. On selection of an arbitrary oscillation frequency, a frequency filter including an optical element such as an etalon is used to select the frequency of laser beam transmitting therethrough and the resonator length is controlled to control the oscillation frequency of laser beam.

When a length is measured using the wavelength of laser beam, a reduction in uncertainty associated with the length measurement requires enhancement of the frequency stability of laser beam. In an iodine-stabilized laser using iodine molecular absorption spectrometry, it is possible to provide a laser beam with high frequency stability when the oscillation frequency is controlled to locate at the center of saturated absorption signals. (See JP-A 2001-274495, JP-A 10-163549, JP-A 2000-261092).

When the laser beam is actually used as a measure of length to select an arbitrary oscillation frequency and achieve the frequency stability of the order of 10⁻¹⁰, it is required to scan the resonation frequency within a range of several GHz and to stabilize the oscillation frequency about 50 kHz at a desired frequency.

Therefore, an actuator for controlling the resonator length and a driver therefor are required to have increased dynamic ranges, which cause difficulty in stabilizing the oscillation frequency.

### SUMMARY OF THE INVENTION

The present invention has been made in consideration of such the problems and has an object to provide a frequency-stabilized laser and frequency-stabilizing method capable of improving the frequency stability of laser beam.

In one aspect the present invention provides a frequency-stabilized laser configured to generate laser beam by resonating an excited light within a resonator including a pair of mirrors arranged at opposite positions, and stabilize the oscillation frequency of the laser beam by varying the resonator length based on an optical output signal obtained when the laser beam is applied to an absorption cell. The frequency-stabilized laser comprises: a photodetector operative to detect the optical output signal; a third-order differential signal detector operative to detect a third-order differential signal of the optical output signal; a first actuator configured to vary the resonator length; a first driver operative to drive the first actuator; a second actuator configured to vary the resonator length; a second driver operative to drive the second actuator; a first controller operative to control the first driver based on the optical output signal; and a second controller operative to control the second driver based on the third-order differential signal, wherein the oscillation frequency is controlled by controlling the resonator length with the use of the first actuator and the second actuator.

In another aspect the present invention provides a frequency-stabilizing method for generating laser beam by resonating an excited light within a resonator including a pair of mirrors arranged at opposite positions, and stabilizing the oscillation frequency of the laser beam by varying the resonator length based on an optical output signal obtained when the laser beam is applied to an absorption cell. The frequency-stabilizing method comprises: a photo-detecting step of detecting the optical output signal; a third-order differential signal detecting step of detecting a third-order differential signal of the optical output signal; a first control step of controlling the resonator length based on the optical output signal; and a second control step of controlling the resonator length based on the third-order differential signal, wherein controlling the resonator length controls the oscillation frequency.

In the present invention, the optical output signal and the third-order differential signal thereof are detected, and the first and second actuators operative to control the resonator length are used in combination. As a result, the overall dynamic range can be elevated without elevating individual dynamic ranges. Therefore, it is possible to improve the frequency stability of laser beam.

### BRIEF DESCRIPTION OF THE DRAWINGS

Preferred embodiments of the present invention will now be described below with reference to the accompanying drawings, in which:
Fig. 1 is a brief diagram of an arrangement of a frequency-stabilized laser according to an embodiment of the present invention;
Fig. 2 shows an optical output signal and a third-order differential signal detected on control of the frequency-stabilized laser according to the embodiment of the present invention;
Fig. 3 shows the optical output signal detected on control of the frequency-stabilized laser according to the embodiment of the present invention; and
Fig. 4 is an enlarged view of the portion A in Fig. 2 associated with the frequency-stabilized laser according to the embodiment of the present invention.

### DETAILED DESCRIPTION OF THE INVENTION

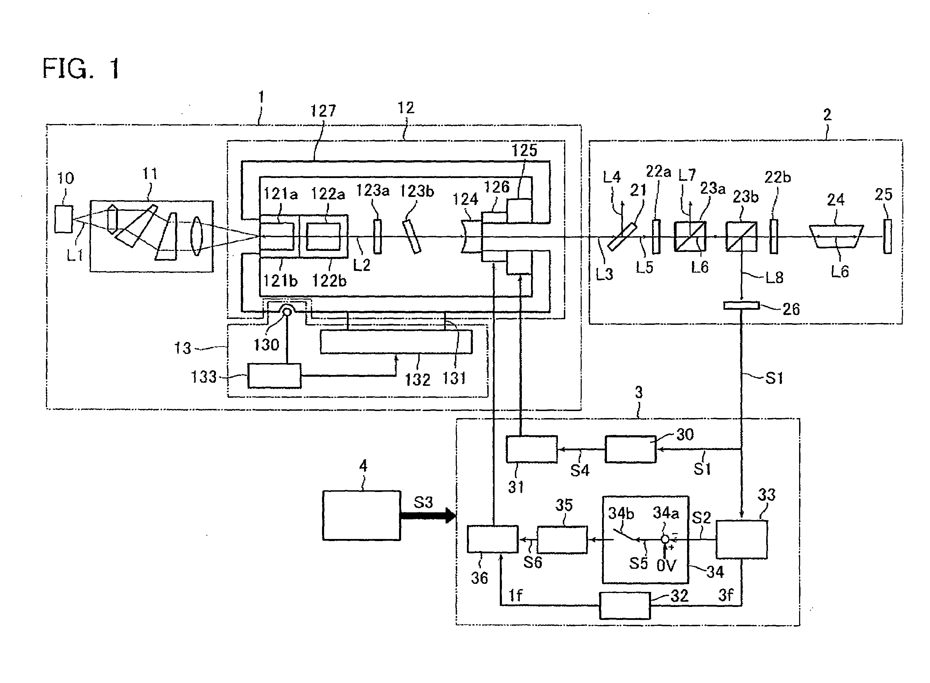

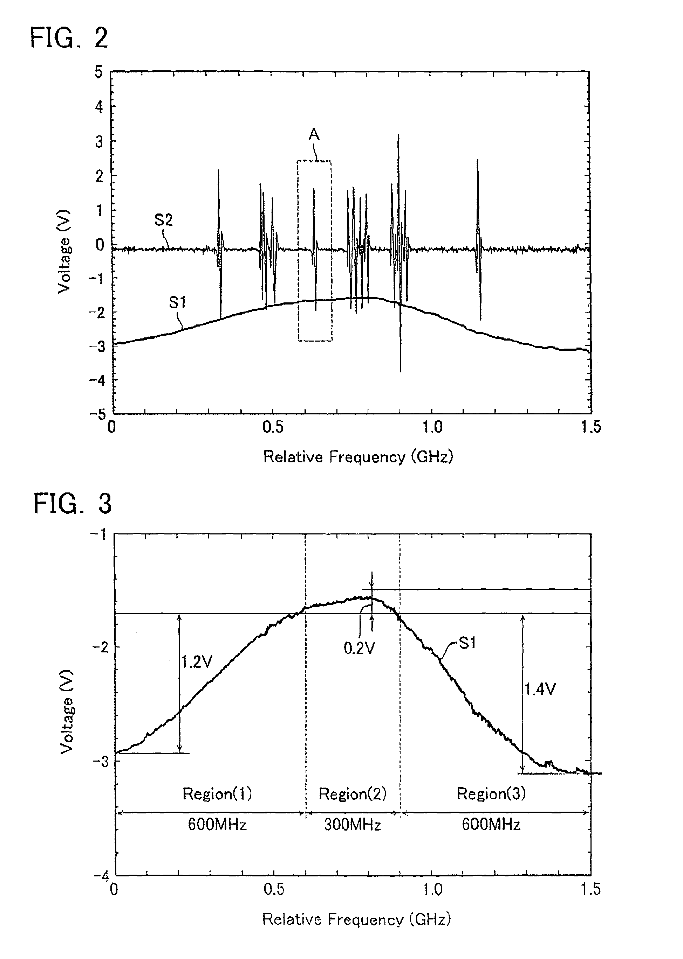

An embodiment according to the present invention is described with reference to Fig. 1. Fig. 1 is a brief diagram of an arrangement of a frequency-stabilized laser according to the embodiment of the present invention. As shown in Fig. 1, the frequency-stabilized laser comprises a laser unit 1, a laser beam detector 2, a drive controller 3, and a computer 4.

The laser unit 1 includes an exciting semiconductor laser 10, a condenser system 11 composed of multiple optical elements, a resonance wave generator 12 operative to generate a resonance wave having a specific wavelength, and a temperature controller 13 operative to control the temperature in the resonance wave generator 12.

The laserunit 1 releases a laser beamL1 having a wavelength of 808 nm when a certain current is supplied to the exciting semiconductor laser 10. The released laser beam L1 is condensed through the condenser system 11 and led into the resonance wave generator 12.

The resonance wave generator 12 has a laser beam entry port (on the left side of the resonance wave generator 12 in Fig. 1), in which an Nd:YVO₄ crystal 121a and a KPT crystal (non-linear optical crystal) 122a are arranged.

The Nd:YVO₄ crystal 121a is a diode laser-excited solid, which emits a light having a wavelength of 1064 nm based on induced radiation when illumination of the laser beam L1 excites Nd atoms. The surface of the Nd:YVO₄ crystal 121a facing the condenser system 11 (on the left side in Fig. 1) is coated to reflect the light having the wavelength of 1064 nm.

The KPT crystal 122a is a non-linear optical crystal, which emits a 532nm-wavelength light, or the second-order harmonic wave, from part of the induced radiation-based light having the wavelength of 1064 nm. If the 1064nm-wavelength light is the single longitudinal mode, the second-order harmonic 532nm-wavelength light also has the single longitudinal mode.

The Nd:YVO₄ crystal 121a and the KPT crystal 122a are mounted in an Nd:YVO₄ crystal holder 121b and a KPT crystal holder 122b (non-linear optical crystal housing) made of brass having relatively large linear expansion coefficients, respectively.

A first etalon 123a and a second etalon 123b are arranged on the central portion in the resonance wave generator 12. These etalons 123a, 123bhave characteristics to transmit only specific frequencies in the laser beam therethrough.

The resonance wave generator 12 has a laser beam exit port (on the right side of the resonance wave generator 12 in Fig. 1), which is provided with a reflecting mirror 124, a first actuator 125, and a second actuator 126. The Nd:YVO₄ crystal 121a through the second actuator 126 are housed in a laser resonator enclosure 127.

The reflecting mirror 124 is coated to reflect the light having the wavelength of 1064 nm and transmit the light having the wavelength of 532 nm therethrough. Accordingly, with respect to the light having the wavelength of 1064 nm, the Nd:YVO₄ crystal 121a and the reflecting mirror 124 configures a resonator.

The first and second actuators 125, 126 comprise respective piezoelectric elements, which can deform to displace the reflecting mirror 124 on application of voltages thereto. The second actuator 126 is determined to exhibit a smaller variation in shape on application of the voltage compared to the first actuator 125.

The temperature controller 13 includes a thermometer 130, a Peltier element 131, a radiator 132 and a temperature control circuit 133.

The thermometer 130 measures the temperature in the resonance wave generator 12. The temperature control circuit 133 determines a voltage applied to the Peltier element 131 from the temperature in the resonance wave generator 12 obtained at the thermometer 130. The Peltier element 131 can cool or heat the laser resonator enclosure 12 7 based on the value of the applied voltage and the polarity thereof. The Peltier element 131 is heated or cooled at the outside thereof in contrast with the laser resonator enclosure 127 while the temperature variation is suppressed by the radiator 132.

The configuration of the above optical system turns the light transmitted through the Nd:YVO₄ crystal 121a and the KPT crystal 122a into a light L2 having wavelengths of 532 nm, 808 nm and 1064 nm. The rotation angles of the first etalon 123a and the second etalon 123b can be adjusted to vary the substantial optical lengths of the etalons, thereby adjusting the frequency of the light L2 transmitted therethrough. In this way, the etalons and the resonator amplify the light L2 and select the wavelength thereof, resulting in a laser beam L3 having wavelengths of 1064 nm and 532 nm in a single longitudinal mode.

Even if antireflective coatings are applied onto both surfaces of the Nd:YVO₄ crystal 121a and the KPT crystal 122a, these crystals work as frequency filters similar to the etalons, and those transmitting through these crystals include only lights with specific frequencies.

The temperature control of the laser resonator enclosure 127 displaces the Nd:YVO₄ crystal holder 121b and the KPT crystal holder 122b having high linear expansion coefficients to vary the resonator length and thus adjust the transmissive frequency of the resonator.

The laser beam detector 2 is described next.

The laser beam L3 emitted from the laser unit 1 is divided and detected at the laser beam detector 2. The laser beam detector 2 includes a harmonic separator 21, a polarizing plate 22a, a λ/4 plate 22b, two polarizing beam splitters 23a, 23b, an iodine cell 24, a reflecting plate 25, and a photodetector 26.

The harmonic separator 21 divides the laser beam L3 having wavelengths of 1064 nm and 532 nm into a laser beam L4 having a wavelength of 1064 nm and a laser beam L5 having a wavelength of 532 nm. The laser beam L4 having the wavelength of 1064 nm is used in measurement of lengths and so forth.

The laser beam L5 having the wavelength of 532 nm is polarized through the polarizing plate 22a into a p-polarized light. The p-polarized laser beam L6 then travels through the polarizing beam splitters 23a, 23b, the λ/4 plate 22b and the iodine cell 24 toward the reflecting plate 25. After reflected from the reflecting plate, it travels again through the iodine cell 24 and the λ/4 plate 22b and finally reaches the polarizing beam splitter 23b.

An s-polarized laser beam L7 is reflected at the polarizing beam splitter 23a and used in measurement of lengths and so forth. In the configuration of the above optical system, the p-polarized laser beam L6 passes through the iodine cell 24, which absorbs specific wavelengths therefrom, and the λ/4 plate 22b twice, and is polarized from the p-polarized light to an s-polarized light. This s-polarized laser beam L8 is reflected at the polarizing beam splitter 23b, then photoelectrically converted at the photodetector 26, and read as the optical output signal S1. The optical output signal S1 is used for reference in frequency stabilizing control.

The drive controller 3 is described next.

The drive controller 3 includes a first controller 30, a first driver 31, a modulating - demodulating signal generator 32, a lock-in amp 33, a frequency stabilizing controller 34, a second controller 35 and a second driver 36. The drive controller 3 executes controls based on a control signal S3 output from the computer 4.

The first controller 30 provides a control signal S4 to start control of the first driver 31 in response to the control signal S3 from the computer 4. The first driver 31 applies a certain voltage to the first actuator 125 based on the control signal S4 to vary the resonator length.

The modulating - demodulating signal generator 32 provides a signal with a frequency of 1f Hz to the second driver 36 and a signal with a frequency of 3f Hz to the lock-in amp 33. The second driver 36 drives the second actuator 126 to modulate the laser beam L3 with 1f Hz. The lock-in amp 33 uses the frequency of 3f Hz to demodulate the optical output signal S1 obtained by excitation of the laser beam L3 modulated with 1f Hz to feed a third-order differential signal S2 to the second controller 35. In this way, the modulating - demodulating signal generator 32 and the lock-in amp 33 function together as a third-order differential signal detector capable of detecting the third-order differential signal of the optical output signal.

The frequency stabilizing controller 34 includes a generator 34a and a switch 34b. The generator 34a feeds back the third-order differential signal S2 to generate a frequency stabilizing control signal S5 effective to null a deviation from the reference OV. The control signal S3 from the computer 4 ON/OFF controls the switch 34b. The frequency stabilizing controller 34 is configured to select whether or not the frequency stabilizing control signal S5 is supplied to the second controller 35.

The second controller 35 provides a control signal S6 to start control of the second driver 36 in response to the control signal S3 from the computer 4. The second driver 36 applies a certain voltage to the second actuator 126 based on the control signal S6 to vary the resonator length.

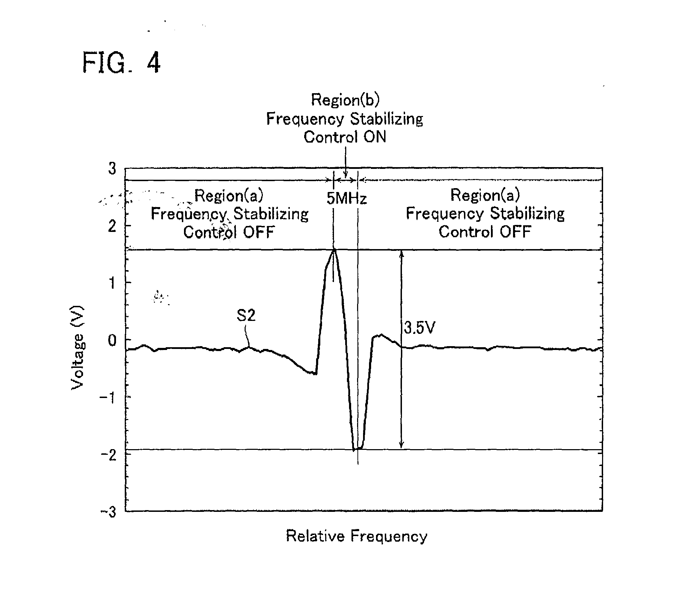

Fig. 2 shows an example of the optical output signal S1 and the third-order differential signal S2 thereof obtained when the resonator length is varied to scan the oscillation frequency within a frequency range of about 1.5 GHz. The voltage polarity of the optical output signal S1 is inverted because the signal photoelectrically converted at the photodetector 26 is inversely amplified.

In the waveform of the third-order differential signal S2, saturated absorption signals associated with the resonance absorption in iodine molecules can be detected at ten-odd locations as peaks and valleys within a frequency range of 1.5 GHz. In the frequency-stabilized laser of this embodiment, the first and second actuators 125, 126 are controlled to obtain one of these multiple peaks and valleys to stabilize the frequency.

The following description is given to the frequency stabilizing control in the frequency-stabilized laser of this embodiment. In the initial state of the frequency-stabilized laser, the actuators 125, 126 are kept stationary. In this state, the photodetector reads the frequency and intensity of the laser beam. At the same time, the rotation angles of the first and second etalons 123a, 123b and the temperature in the laser resonator enclosure 127 are adjusted to bring the oscillation frequency of the laser beam close to a desired frequency to enhance the intensity of the laser beam, as determined.

The first controller 30 controls the first driver 31 based on the control signal S3 to start driving the first actuator 125. The absorption in iodine molecules occurs within the oscillation frequency range of 1 GHz. Accordingly, the drive range of the first actuator 125 is determined at several GHz approximately to scan the oscillation frequency range. At the same time, the third-order differential signal S2 is provided from the lock-in amp 33 to the frequency stabilizing controller 34. The computer 4 detects the third-order differential signal S2. When the computer detects that the oscillation frequency of the laser beam L6 is coincident with the center of the saturated absorption signals at a set frequency, it sends a control signal S3 to the first controller 30 to instruct a halt of driving the first actuator 125. The first controller 30 then determines the voltage of the optical output signal S1 at the oscillation frequency at the time of the halt as a target value and drives the first actuator 125 so as to achieve the target value, thereby controlling the laser beam to locate near the desired frequency.

The second controller 35 controls the second driver 36 to drive the second actuator 126. The switch 34b in the frequency stabilizing controller 34 is turned OFF for scanning at frequencies separated from a peak and a valley and the switch 34b is turned ON in the vicinity of the center of desired saturated absorption signals (between a peak and a valley). Therefore, the third-order differential signal S2 exhibits 0 V at the center of the saturated absorption signals. Accordingly, the reference determined at 0 V makes it possible to execute the frequency stabilizing control targeted on the center of the saturated absorption signals. Through these control steps, the optical output signal S1 and the third-order differential signal S2 shown in Fig. 2 can be measured and the frequency stability of the order of 10⁻¹⁰ at a desired frequency can be achieved. The region scanned when the switch 34a is made OFF/ON can be represented as a region (a)/region (b) in Fig. 4 as described later.

Fig. 3 shows a waveform of the optical output signal S1 relative to the oscillation frequency. As can be seen from Fig. 3, the variation width of the optical output signal S1 relative to an about 1. 5 GHz variation of the relative frequency corresponds to a voltage width of about 1.5V and has a waveform in the form of a secondary curve at the central portion. In regions (1) and (3) at both ends of the secondary curve, the optical output signal S1 has a variation of about 1.2-1.4 V relative to the relative frequency range of 600 MHz. On the other hand, in a region (2) at the center of the secondary curve, the optical output signal S1 has a variation width of about 0.2 V relative to the relative frequency range of 300 MHz.

The drive range of the first actuator 125 is sufficient if it can scan a relative frequency range of about 2 GHz as can be seen from Fig. 3.

It is assumedherein that the first actuator 125 can control the oscillation frequency at a width corresponding to a voltage width of about 10 mV of the optical output signal S1. In this case, the oscillation frequency can be controlled at a width of about 4 to 5 MHz (= 600 MHz/(1.2 to 1.4 V/0.01 V)) in the regions (1), (3) at both ends of the waveform of the secondary curve in Fig. 3. On the other hand, in the region (2) at the center of the secondary curve, the tilt of the optical output signal S1 decreases. Accordingly, when the oscillation frequency is similarly controlled at a width corresponding to a voltage width of about 10 mV of the optical output signal S1, the width of the oscillation frequency increases though it can be controlled equal to about 15 MHz (= 300 MHz/(0.2 V/0.01 V)).

The dynamic range relative to the control width of the first actuator 125 is equal to about 52-54 dB (= 20 log(2 GHz/4 to 5 MHz)) in the regions (1), (3) and about 42 dB (= 20 log(2 GHz/15MHz)) in the region (2). Accordingly, it is sufficient that the first actuator 125 and the first driver 31 have a dynamic range of 50 dB.

Fig. 4 shows a waveform in an enlarged view of the portion A having a saturated absorption signal on the third-order differential signal S2. As obvious from fig.4, between a peak and a valley of the saturated absorption signal lies an almost liner waveform having a frequency width of 5 MHz and a voltage width of 3.5 V. As described above, the frequency stabilizing control is executed only in the region (b) while normal scanning is performed in the regions (a).

The drive range of the second actuator 126 is sufficient if it can scan the oscillation frequency over about 15 MHz as can be seen from Fig. 4.

It is assumed herein that the second actuator 126 can control the oscillation frequency such that the saturated absorption signal has a width of about 10 mV. In this case, the oscillation frequency can be controlled at a width of about 14 kHz (= 5 MHz/(3.5 V/0.01 V)).

The scan width relative to the control width of the second actuator 126 is equal to about 61 dB (= 20 1og(15 MHz/14 kHz) ). Accordingly, it is sufficient that the second actuator 126 and the second driver 36 have a dynamic range of 60 dB.

From the foregoing, a frequency range of about 1.5 GHz is scanned as a whole to control such that the frequency stability of the order of 10⁻¹⁰ can be obtained at a desired frequency. In this case, the dynamic range required for each of the first and second actuators 125, 126 is equal to about 60 dB, which can be easily realized. Therefore, the individual dynamic ranges of the first driver 31 and the second driver 36 can be suppressed small. Thus, it is possible to supply a laser beam having a stabilized oscillation frequency.

The embodiments of the invention have been described above though the present invention is not limited to these embodiments. For example, in the above embodiments, the saturated absorption signal in iodine molecules is referenced for the light having the wavelength of 532 nm. Alternatively, if the oscillation frequency of laser beam is changed, the reference molecules or atoms may also be correspondingly changed.

## Claims

1. A frequency-stabilized laser configured to generate laser beam by resonating an excited light within a resonator including a pair of mirrors arranged at opposite positions, and stabilize the oscillation frequency of the laser beam by varying the resonator length based on an optical output signal obtained when the laser beam is applied to an absorption cell, the frequency-stabilized laser comprising:
a photodetector operative to detect the optical output signal;
a third-order differential signal detector operative to detect a third-order differential signal of the optical output signal;
a first actuator configured to vary the resonator length;
a first driver operative to drive the first actuator;
a second actuator configured to vary the resonator length;
a second driver operative to drive the second actuator;
a first controller operative to control the first driver based on the optical output signal; and
a second controller operative to control the second driver based on the third-order differential signal,
wherein the oscillation frequency is controlled by controlling the resonator length with the use of the first actuator and the second actuator.

2. The frequency-stabilized laser according to claim 1, wherein the first controller controls the first driver to halt driving the first actuator on detection of a peak and a valley of the third-order differential signal,
wherein the second controller drives the second actuator after the first actuator stops such that a relative frequency locates at the center between the peak and the valley of the third-order differential signal.

3. The laser according to claim 1 or claim 2,
wherein the first actuator and the second actuator comprise respective actuators having different sensitivities.

4. The frequency-stabilized laser according to any of the preceding claims,
further comprising a plurality of etalons within the resonator.

5. The laser according to any of the preceding claims, further comprising within the resonator a non-linear optical crystal operative to generate a secondary harmonic wave of the laser beam.

6. The laser according to any of the preceding claims, further comprising:
a non-linear optical crystal housing having a high linear expansion coefficient and provided to house the non-linear optical crystal therein; and
a temperature controller operative to control the temperature in the non-linear optical crystal housing.

7. A frequency-stabilizing method for generating laser beam by resonating an excited light within a resonator including a pair of mirrors arranged at opposite positions, and stabilizing the oscillation frequency of the laser beam by varying the resonator length based on an optical output signal obtained when the laser beam is applied to an absorption cell, the frequency-stabilizing method comprising:
a photo-detecting step of detecting the optical output signal;
a third-order differential signal detecting step of detecting a third-order differential signal of the optical output signal;
a first control step of controlling the resonator length based on the optical output signal; and
a second control step of controlling the resonator length based on the third-order differential signal,
wherein controlling the resonator length controls the oscillation frequency.

8. The frequency-stabilizing method according to claim 7, wherein the first control step includes halting the control of the resonator length on detection of a peak and a valley of the third-order differential signal,
wherein the second control step includes controlling the resonator length such that a relative frequency locates at the center between the peak and the valley of the third-order differential signal after halting the control of the resonator length in the first control step.

9. The method according to claim 7 or claim 8,
wherein the amounts of variation of the resonator length in the first control step and the second control step are different from each other.
